# DEMANDE DE BREVET EUROPEEN

(11) **EP 2 367 122 A1**
(43) Date de publication de la demande: **21.09.2011**
(21) Numéro de dépôt: 11154510.9
(22) Date de dépôt: 15.02.2011
(51) Int. Cl.: G06F 17/30

(54) **Procédé de structuration de données hierarchiques dans des bases de données relationnelles**

(30) Priorité: 16.02.2010 FR 1000649
(71) Demandeur: Lascom, 91571 Bievres (FR)
(72) Inventeur: Zina, Souheil, 78280, Guyancourt (FR)
(74) Mandataire: Henriot, Marie-Pierre

(57) **Abrégé**

L'invention concerne un procédé de structuration en un arbre ordonné de profondeur prédéterminée P', de données respectant des critères prédéterminés Fs et organisées sous la forme d'un graphe orienté acyclique de profondeur P qui comporte des noeuds et des liens entre ces noeuds, ces noeuds et liens étant stockés par type dans des tables d'un SGBD relationnel apte à être interrogé par un langage de requête à partir d'un serveur applicatif relié à une interface utilisateur, les critères Fs étant déterminés sur les noeuds et/ou les liens, caractérisé en ce qu'il comprend les étapes suivantes :
a) création d'une table "CACHE" dans le SGBDR,
b) détermination par le SGBDR d'un ensemble E,
b) déroulement d'une itération ayant un identifiant id et/ou des propriétés qui comprend les sous-étapes suivantes :
i) détermination par le SGBDR de l'ensemble S des enfants des noeuds de E respectant les critères Fs,
ii) insertion par le SGBDR des noeuds de l'ensemble S et de leurs index respectifs dans la table "CACHE",
iii) détermination par le serveur applicatif de critères Fe en fonction de la profondeur P', de l'identifiant id et/ou de propriétés de l'itération,
iv) détermination par le SGBDR de l'ensemble E en appliquant les critères Fe à l'ensemble des noeuds dans la table "CACHE",
v) P'=P'-1, répéter les étapes i, ii, iii, iv et v tant que P'>0 et que S≠∅,

c) envoi par le SGBDR au serveur applicatif d'une information de fin de traitement avec le nombre de noeuds chargés dans la table "CACHE" et d'un identifiant d'accès à la table "CACHE".

## Description

Le domaine de l'invention est celui de la structuration, de la recherche et de la navigation dans des ensembles de données hiérarchiques stockées dans des bases de données relationnelles.

La notion de hiérarchie est omniprésente dans les systèmes de gestion de données techniques, de gestion de configurations et plus globalement, de gestion du cycle de vie des produits (PLM ou Product Lifecycle Management). La principale caractéristique de ces applications réside dans leur capacité à structurer et gérer l'évolution des différentes données, tout en maintenant la cohérence et l'intégrité des informations.

Les données sont représentées sous la forme d'informations avec de multiples niveaux de détails. Ces données sont organisées à l'aide de structures de graphe acyclique orienté (ou DAG en anglais, acronyme de l'expression anglo-saxonne Directed Acyclic Graph). La profondeur P est représentative de ces niveaux de détails.

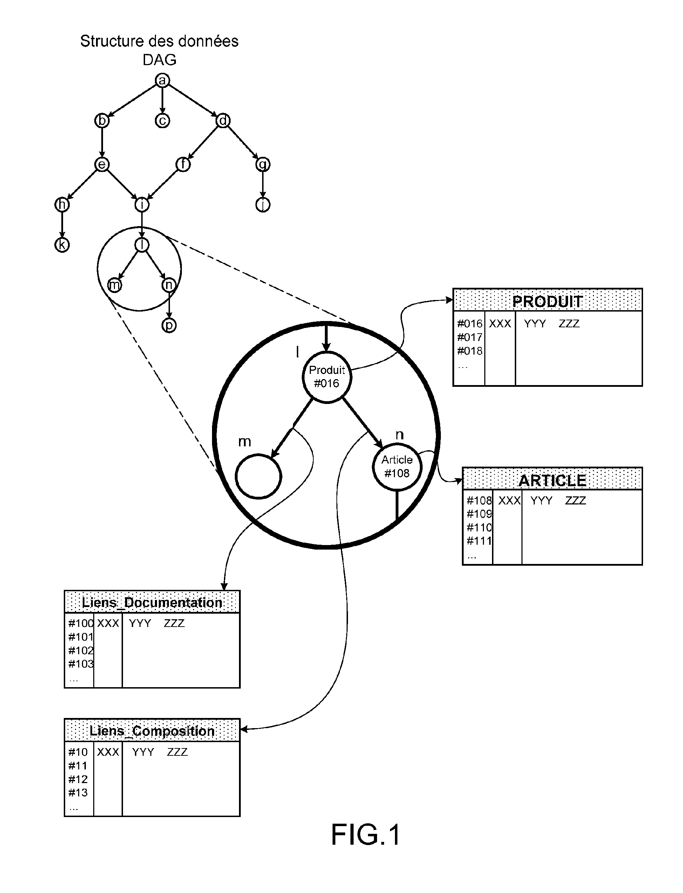

Un graphe est constitué par un ensemble de noeuds, les noeuds étant reliés entre eux par des liens orientés. Un chemin est une séquence de liens consécutifs tous parcourus dans le même sens : chaque lien de la suite a une extrémité en commun avec le lien précédent. Un cycle est un chemin dans lequel un noeud apparaît au moins deux fois. Un DAG dont on présente un exemple figure 1, est un graphe dont tous les liens sont orientés et qui n'a pas de cycle. Dans cet exemple la profondeur P égale 6, la racine n'étant pas comptée.

Cette organisation hiérarchique en DAG permet de fournir des liens pour naviguer d'un noeud à un autre quelle que soit leur position relative dans la hiérarchie. Plusieurs chemins possibles peuvent exister entre deux noeuds du graphe comme par exemple entre les noeuds « a » et « i » de la figure 1, ce qui correspond à des contextes d'utilisation différents.

Les liens sont typés ; chaque type de lien est identifié par son propre jeu de propriétés (dates de début et de fin de validité, quantités, etc.) permettant de décrire plus précisément les relations entre les noeuds et autorisant, ainsi, la traçabilité des évolutions de ces graphes. Deux types de liens sont montrés sur l'exemple de la figure 1 : le type "Documentation" et le type "Composition".

Chaque noeud du graphe est associé à un objet technique. On désigne par le terme objet technique, un élément d'information servant de base à un raisonnement sur lequel les traitements sont effectués. Les objets techniques sont typés, chaque type d'objet est identifié par son propre jeu de propriétés. Deux types d'objets techniques sont montrés sur l'exemple de la figure 1 : le type "Produit" et le type "Article".

Les données sont gérées par un Système de Gestion de Base de Données Relationnelle (SGBDR). Ces données sont enregistrées dans des tables à deux dimensions (lignes et colonnes). Une table est associée à chaque type d'objet technique (respectivement type de lien). Dans l'exemple, il y a quatre tables : "Documentation", "Composition", "Produit" et "Article". La manipulation de ces données se fait selon la théorie de l'algèbre relationnelle. Les SGBDR sont couramment utilisés dans l'industrie pour des raisons à la fois de maturité, de performance et de simplicité.

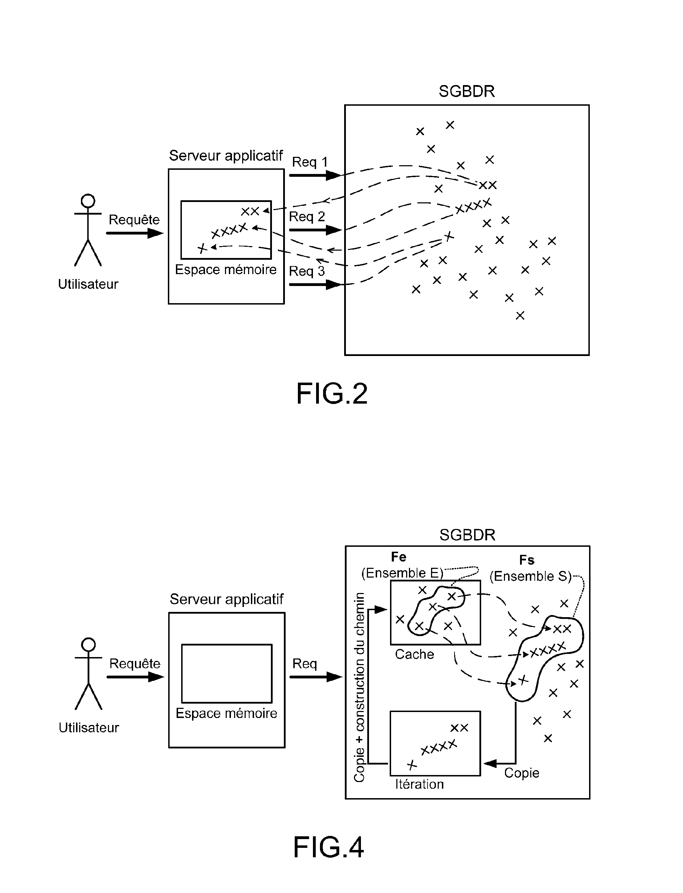

Ces données sont manipulées par le serveur applicatif aussi désigné serveur d'applications, selon les spécificités métier des applications (on parle de logique métier ou logique applicative). Le serveur applicatif assure l'interface entre l'utilisateur et les données stockées et gérées par le SGBDR comme le montre la figure 2. Sur cette figure on montre comment une requête « requête » est décomposée en trois requêtes « req1, req2, req3 » par le serveur applicatif pour obtenir l'ensemble des noeuds escomptés.

L'organisation des documents HTML sur le Web peut aussi être modélisée avec une structure de graphe. Cependant ces graphes ne sont pas des DAG car il peut y avoir des cycles. En outre, les liens entre les noeuds du graphe d'un document HTML ne sont pas typés et ne portent pas de propriétés. Il est clair pour l'homme du métier, que notre problématique diffère de l'organisation des documents HTML sur le Web.

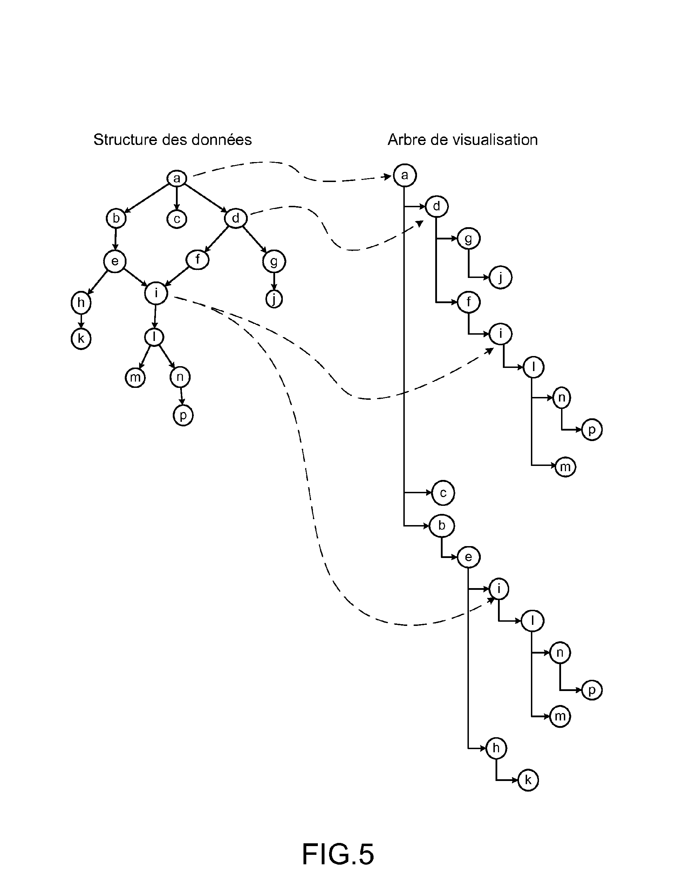

La manipulation de ces données hiérarchiques par l'utilisateur s'appuie sur des structures de visualisation arborescentes. Un arbre de visualisation offre à l'utilisateur un support pour la pagination et plus généralement pour la navigation dans ces graphes. Un exemple d'arbre de visualisation associé au DAG de la figure 1, est montré figure 5. L'arbre de visualisation d'un DAG a la même profondeur P que ledit DAG. On rappelle que la pagination consiste à afficher une partie d'un arbre. Cet arbre de visualisation est obtenu par l'application de filtres sur ces données hiérarchiques organisées en DAG. Chaque noeud du DAG est représenté dans l'arbre de visualisation n fois ; n étant le nombre de liens qui pointent (liens entrants) vers ce noeud dans le DAG. Dans l'exemple de la figure 5, le noeud « i » est représenté 2 fois dans l'arbre de visualisation.

Un filtre est composé d'un ensemble de critères de recherche. Les recherches dans ces structures de graphes sont très souvent réalisées avec des critères qui portent à la fois sur les propriétés des objets techniques et les propriétés des liens. Pour certains types de recherches, les critères sur les propriétés des liens doivent être vérifiés sur l'ensemble du chemin entre le noeud de départ et le noeud d'arrivée.

Les requêtes en base de données ne sont donc pas aisées car la relation entre le noeud du graphe et l'instance de l'objet technique se matérialise par une référence vers des tables différentes selon le type des instances. On désigne par instance d'un type d'objet (respectivement type de lien), une occurrence ou un enregistrement dans la table associée à ce type d'objet (respectivement type du lien). La figure 1 illustre le stockage de données sous la forme d'un graphe orienté acyclique et les tables du SGBDR associé. Pour la table "Produit", 3 instances sont indiquées (#016, #017, #018), 4 sont indiquées pour les tables "Article" (#108, #109, #110, #111), "Documentation" (#100, #101, #102, #103), et "Composition" (#10, #11, #12, #13). Le noeud "1" référence une instance (#016) dans la table "Produit". Le noeud "n" référence une instance (#108) dans la table "Article".

Il est connu d'effectuer des recherches dans une base de données de manière récursive. Pour un noeud donné du graphe, on cherche l'ensemble des noeuds enfants qui satisfont les critères de recherche exprimés par l'utilisateur, puis on recommence pour chacun des noeuds obtenus jusqu'au niveau de détail demandé par l'utilisateur. On peut citer comme exemple de recherche celle qui consiste à charger les éléments mécaniques d'un moteur de véhicule jusqu'au niveau des composants élémentaires (piston, bielle, etc.). A cet effet, pour chaque requête, l'ensemble des données qui forment le graphe sont chargées sur le serveur applicatif et traitées en mémoire comme illustré sur la figure 2.

Si cette approche récursive permet de traiter des graphes de petite taille, elle s'avère inadaptée pour des structures hiérarchiques volumineuses avec plusieurs niveaux d'imbrications. En effet, le nombre de requêtes traitées par le serveur de base de données et la taille de l'espace mémoire utilisé par le serveur applicatif sont proportionnels au nombre de noeuds chargés. Pour un graphe comportant par exemple 3000 noeuds répartis sur 3 niveaux, il faut donc exécuter 3000 requêtes pour charger dans l'espace mémoire ces 3000 noeuds. Le temps de traitement de la recherche augmente alors dans les mêmes proportions jusqu'à occasionner une gêne importante pour l'utilisateur. Les performances de cette recherche sont très liées aux performances du serveur applicatif et de sa connexion avec le serveur de base de données. Une solution consiste à utiliser un serveur plus puissant tout en augmentant le débit entre le serveur et le SGBDR. Cette solution pourrait être très couteuse et présente des limites en terme d'extensibilité.

En conséquence, il demeure à ce jour un besoin pour un système donnant simultanément satisfaction à l'ensemble des exigences précitées, en termes de temps de traitement, de volume de données traitées, de coût du système et de facilité d'utilisation.

Les contraintes que l'on cherche à améliorer sont principalement le temps de traitement et le volume des données gérées par le SGBDR. On cherche aussi à améliorer la montée en charge du serveur applicatif et du SGBDR. La montée en charge prend en compte le nombre d'utilisateurs connectés simultanément au système.

Cette optimisation du temps de traitement consiste à réduire le nombre de requêtes envoyées au SGBDR par le serveur applicatif et le volume des données traitées par le serveur applicatif car la demanderesse a remarqué que très souvent, le serveur applicatif représente le goulot d'étranglement. Cela permet également de récupérer en un temps très réduit l'ensemble des objets et de leurs propriétés contenus dans un segment quelconque (aussi désigné page) de l'arbre de visualisation.

L'invention est basée sur une préparation des données du graphe directement dans le SGBDR pour qu'elles soient aisément exploitables par le serveur applicatif.

Le principe de l'invention est basé sur une approche itérative qui met en oeuvre deux tables du SGBDR :
- une table "CACHE" pour stocker l'ensemble des noeuds et liens qui forment l'arbre de visualisation,
- une table "ITERATION" pour stocker les résultats intermédiaires obtenus par les différentes itérations.

Il s'agit de structurer les données sous la forme d'un arbre ordonné qui satisfasse les critères de recherche exprimés par l'utilisateur. Ces critères de recherche portent à la fois sur les propriétés des objets techniques et/ou les propriétés des liens.

Plus précisément l'invention a pour objet un procédé de structuration en un arbre ordonné de profondeur prédéterminée P', de données respectant des critères prédéterminés Fs et organisées sous la forme d'un graphe orienté acyclique de profondeur P qui comporte des noeuds et des liens entre ces noeuds, ces noeuds et liens étant stockés par type dans des tables d'un SGBD relationnel apte à être interrogé par un langage de requête à partir d'un serveur applicatif relié à une interface utilisateur, les critères Fs étant déterminés sur les noeuds et/ou les liens. Il est principalement caractérisé en ce qu'il comprend les étapes suivantes :
a) création d'une table "CACHE" dans le SGBDR,
b) détermination par le SGBDR d'un ensemble E,
c) déroulement d'une itération ayant un identifiant id et/ou des propriétés qui comprend les sous-étapes suivantes :
   i) détermination par le SGBDR de l'ensemble S des enfants des noeuds de E respectant les critères Fs,
   ii) insertion par le SGBDR des noeuds de l'ensemble S et de leurs index respectifs dans la table "CACHE",
   iii) détermination par le serveur applicatif de critères Fe en fonction de la profondeur P', de l'identifiant i et/ou de propriétés de l'itération,
   iv) détermination par le SGBDR de l'ensemble E en appliquant les critères Fe à l'ensemble des noeuds de la table "CACHE",
   v) P'=P'-1, répéter les étapes i, ii, iii, iv et v de l'itération tant que P'>0 et que S≠Ø,
d) envoi par le SGBDR au serveur applicatif d'une information de fin de traitement avec le nombre de noeuds chargés dans la table cache et d'un identifiant d'accès à la table "CACHE".

Selon une caractéristique de l'invention, à chaque noeud enfant est associé un index qui permet de localiser de manière unique le noeud dans l'arbre.

L'étape ii) comprend typiquement les sous-étapes suivantes :
- copier l'ensemble S dans une table "ITERATION",
- calcul pour chaque noeud de S de son index et
- ajout dans la table "CACHE" des noeuds de S, ceux-ci étant respectivement associés à leur index.

L'invention a aussi pour objet un système de gestion de base de données relationnelle qui comprend des moyens de mise en oeuvre du procédé de structuration de données en un arbre ordonné tel que décrit.

D'autres caractéristiques et avantages de l'invention apparaîtront à la lecture de la description détaillée qui suit, faite à titre d'exemple non limitatif et en référence aux dessins annexés dans lesquels :
la figure 1 illustre le stockage de données sous la forme d'un graphe orienté acyclique et les tables du SGBDR associé,
la figure 2 représente schématiquement certaines étapes d'un procédé de structuration de données selon l'état de la technique,
la figure 3 représente un organigramme du déroulement général du procédé de structuration de données selon l'invention
la figure 4 représente schématiquement certaines étapes d'un procédé de structuration de données selon l'invention,
la figure 5 représente schématiquement un exemple d'arbre de visualisation issu du graphe orienté acyclique de la figure 1.

D'une figure à l'autre, les mêmes éléments sont repérés par les mêmes références.

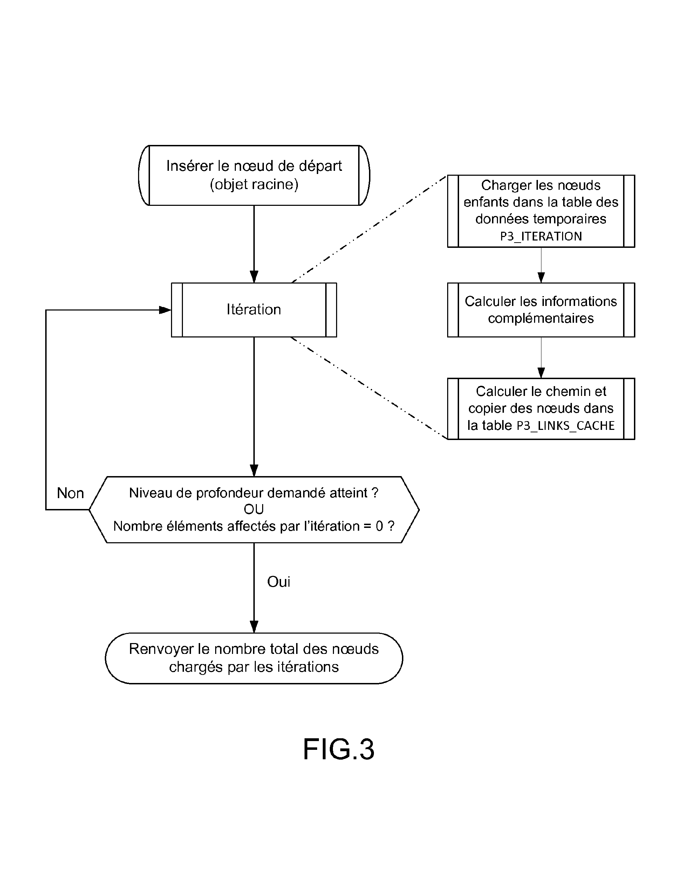

Le déroulement général du procédé de structuration de données selon l'invention est illustré par la figure 3. Il est exécuté par le SGBDR.

Une première étape consiste à insérer dans la table "CACHE" un ensemble de départ. Un ensemble de départ comporte généralement l'objet de départ que l'on appelle "objet racine" mais il peut comporter plusieurs objets racines.

Commence ensuite un cycle d'itérations qui vont permettre d'indexer sous la forme d'une liste ordonnée l'ensemble des données nécessaires pour construire l'arbre de visualisation. On rappelle qu'indexer permet de savoir si un noeud est descendant d'un autre noeud, par simple comparaison des index de ces noeuds, c'est-à-dire par comparaison de ces listes ordonnées.

Le nombre d'itérations est égal au niveau de profondeur P' (ou niveau de décomposition) demandé par l'utilisateur. Le niveau P' est une valeur entière exprimée par l'utilisateur qui représente le niveau de détail qu'il souhaite atteindre; on a P'≤ P.

Chaque itération possède des propriétés qui permettent de l'identifier et utilise deux filtres de critères : un filtre d'entrée Fe et un filtre de sortie Fs illustrés figure 4.

Le résultat d'une itération est un ensemble S de noeuds considérés comme enfants des noeuds utilisés en entrée et qui ont satisfait les critères du filtre de sortie Fs ; les critères du filtre de sortie sont les critères de recherche exprimés par la requête « req » de l'utilisateur. Ces noeuds enfants sont copiés dans la table "ITERATION" puis comme on le verra plus loin vers la table "CACHE". Pour la première itération l'ensemble des noeuds utilisés en entrée est l'ensemble de départ.

L'ensemble E des noeuds utilisés en entrée de l'itération suivante, aussi désigné nouvel ensemble E, est obtenu en appliquant un filtre Fe au résultat de l'itération précédente c'est-à-dire à l'ensemble S : ce nouvel ensemble E est donc l'ensemble S ou un sous-ensemble de S. Les critères du filtre d'entrée Fe sont construits automatiquement par le serveur applicatif. Selon un mode de mise en oeuvre particulier de l'invention, ces critères sont basés sur la profondeur P' et sur le nombre d'itérations i réalisées (niveau de décomposition). Selon un autre mode de mise en oeuvre de l'invention, les critères du filtre Fe sont basés sur les propriétés d'identifications des itérations.

On va illustrer ces filtres par un exemple s'appuyant sur le DAG de la figure 1. Le critère de Fs consiste par exemple à choisir tous les enfants des noeuds de l'ensemble E de départ.

Pour la 1^{ère} itération (id=1), E= « a », le noeud racine « a » est inséré dans la table "CACHE". En appliquant Fs à E, qui a 3 enfants, on obtient S= « b, c, d ». L'ensemble S est inséré dans la table "CACHE". Cette table contient donc les noeuds « a, b, c, d ». L'identifiant « id » est associé à chaque noeud chargé dans la table "CACHE" qui comporte par exemple une nouvelle colonne « id ».

Pour la 2^{ème} itération (id=2), on applique tout d'abord Fe à l'ensemble des noeuds présents dans la table "CACHE", pour obtenir E. Les critères de Fe consistent par exemple à prendre comme ensemble E, l'ensemble de sortie S de l'itération précédente ; on a donc E= « b, c, d ». En appliquant Fs à E, on obtient S= « e, f, g ». L'ensemble S est inséré dans la table "CACHE". Cette table contient donc les noeuds « a, b, c, d, e, f, g ».

Pour la 3^{ème} itération (id=3), on applique tout d'abord Fe à l'ensemble des noeuds présents dans la table "CACHE", pour obtenir E. Les critères de Fe consistent à prendre comme ensemble E, l'ensemble de sortie S de l'itération précédente ; on a donc E= « e, f, g ». En appliquant Fs à E, on obtient S= « h, i, i, j ». On notera que le noeud « i » est présent deux fois dans l'ensemble de sortie S, car dans l'exemple de la figure 1, « i » est enfant des noeuds « e » et « f ». L'ensemble S est inséré dans la table "CACHE". Cette table contient donc les noeuds « a, b, c, d, e, f, g, h, i, i, j ».

Pour la 4^{ème} itération (id=4), on applique tout d'abord Fe à l'ensemble des noeuds présents dans la table "CACHE", pour obtenir E. Les critères de Fe consistent à prendre comme ensemble E, l'ensemble de sortie S de l'itération précédente ; on a donc E= « h, i, i, j ». En appliquant Fs à E, on obtient S= « k, l, l ». On notera que le noeud « l » est présent deux fois dans l'ensemble de sortie S, car son noeud parent « i » est présent deux fois dans l'ensemble d'entrée E. L'ensemble S est inséré dans la table "CACHE". Cette table contient donc les noeuds « a, b, c, d, e, f, g, h, i, i, j, k, l, l ».

Pour la 5^{ème} itération (id=5), on applique tout d'abord Fe à l'ensemble des noeuds présents dans la table "CACHE", pour obtenir E. Les critères de Fe consistent à prendre comme ensemble E, l'ensemble de sortie S de l'itération précédente ; on a donc E= « k, l, l ». En appliquant Fs à E, on obtient S= « m, n, m, n ». On notera que les noeuds « m, n » sont présents deux fois dans l'ensemble de sortie S, car leurs noeud parent « l » est présent deux fois dans l'ensemble d'entrée E. L'ensemble S est inséré dans la table "CACHE". Cette table contient donc les noeuds « a, b, c, d, e, f, g, h, i, i, j, k, l, l, m, n, m, n »

Pour la 6^{ème} itération (id=6), on applique tout d'abord Fe à l'ensemble des noeuds présents dans la table "CACHE", pour obtenir E. Les critères de Fe consistent à prendre comme ensemble E, l'ensemble de sortie S de l'itération précédente ; on a donc E= « m, n, m, n ». En appliquant Fs à E, on obtient S= « p, p ». On notera que le noeud « p » est présent deux fois dans l'ensemble de sortie S, car son noeud parent « n » est présent deux fois dans l'ensemble d'entrée E. L'ensemble S est inséré dans la table "CACHE". Cette table contient donc les noeuds « a, b, c, d, e, f, g, h, i, i, j, k, l, l, m, n, m, n, p, p »

On notera que id désigné identifiant de l'itération, varie de 1 à P ; de manière générale cet identifiant id varie de 1 à l avec l≤ P notamment lorsque l'ensemble de départ n'est pas le noeud racine. On pourrait par exemple prendre comme ensemble de départ E= « h, i, j ».

Dans l'exemple précédent, l'identifiant est le N° de l'itération ; dans un autre exemple, l'identifiant id pourrait être un code aléatoire.

On notera qu'à la fin du cycle des itérations, la table "CACHE" contient l'ensemble des noeuds qui forment l'arbre de visualisation présenté à la figure 5.

Plus précisément, chaque itération comprend les sous-étapes suivantes:
❖ Chargement des noeuds enfants :
   o Le filtre Fe est déterminé par le serveur applicatif en fonction de la profondeur P', de l'identifiant et éventuellement d'autres propriétés de l'itération.
   o Les noeuds d'entrée sont obtenus par l'application du filtre Fe aux noeuds stockés dans la table "CACHE". On désigne E cet ensemble de noeuds d'entrée ; sur la figure 4, E comprend 3 noeuds d'entrée obtenus en appliquant Fe aux 6 noeuds de la table "CACHE". Cette étape détermine les types d'objets techniques concernés par les critères de recherche définis par l'utilisateur.
   o Pour chaque type d'objet technique obtenu par l'étape précédente, l'application du filtre Fs c'est-à-dire l'application des critères de recherche définis par l'utilisateur permet de charger l'ensemble des noeuds considérés comme enfants de l'ensemble E des noeuds en entrée. On désigne S cet ensemble de noeuds enfants ; sur la figure 4, S comprend 7 noeuds enfants, 2 enfants issus d'un premier noeud d'entrée, 4 issus d'un deuxième noeud d'entrée et un issu du troisième noeud d'entrée. Cette étape fait intervenir les relations (aussi désignées jointures) entre tables différentes du SGBDR ; le résultat c'est-à-dire l'ensemble S est copié dans la table "ITERATION".
      Le nombre des requêtes dans le SGBDR correspond au nombre de types d'objets techniques concernés.
❖ Chargement d'informations complémentaires : cette étape facultative permet de calculer les informations liées aux noeuds chargés et éventuellement utiles pour construire l'arbre de visualisation ou pour continuer le cycle des itérations. Par exemple, calculer pour un noeud le nombre de ses descendants ou charger son état.
❖ Calcul du chemin (ou plus généralement indexation) : Le résultat des deux étapes précédentes est un ensemble S de noeuds considérés comme enfants de l'ensemble d'entrée E, auxquels sont éventuellement associées des informations complémentaires.
   Cette étape permet de copier ce résultat S dans la table "CACHE" en associant pour chaque noeud le chemin (ou plus généralement l'index) qui permet de localiser de manière unique chaque noeud dans l'arborescence ; ce chemin est unique puisqu'il s'agit d'un arbre. L'ordre de tri défini par l'utilisateur est pris en compte dans le calcul de ce chemin. Ce résultat S est inséré à la suite du résultat de l'itération précédente ; au fur et à mesure des itérations la table "CACHE" s'enrichit.
   Il existe plusieurs modes de calcul du chemin. Un exemple de mode de calcul est de convertir le rang de chaque noeud en hexadécimale puis de le concaténer avec le chemin de son noeud parent. Un autre exemple est d'utiliser un chemin binaire.

Pour résumer, chaque itération s'appuie sur l'ensemble E de noeuds d'entrée stocké dans la table "CACHE", l'ensemble S de noeuds de sortie étant copié dans cette même table "CACHE". Ainsi, le résultat d'une itération correspond à l'ensemble de noeuds en entrée de l'itération suivante.

Le résultat final obtenu dans la table "CACHE" correspond à la structure de l'arbre de visualisation qui a satisfait les critères des recherches et l'ordre de tri exprimés par l'utilisateur.

Le cycle des itérations s'arrête si le niveau de profondeur P' est atteint ou si le résultat S d'une itération est vide (l'ensemble des noeuds en entrée n'ont aucun fils).

La pagination de l'arbre de visualisation s'appuie sur des segments obtenus en ajoutant des critères sur les chemins des noeuds indexés dans la table "CACHE". Par exemple, pour chercher les descendants d'un noeud "n" quelconque de l'arbre de visualisation stocké dans la table "CACHE", il suffit de chercher tous les noeuds dont le chemin commence par le chemin du noeud "n".

A la fin du traitement, le SGBDR envoie au serveur applicatif une information de fin de traitement avec le nombre de noeuds chargés dans la table "CACHE" et un identifiant d'accès à cette table.

## Revendications

1. Procédé de structuration en un arbre ordonné de profondeur prédéterminée P', de données respectant des critères prédéterminés Fs et organisées sous la forme d'un graphe orienté acyclique de profondeur P qui comporte des noeuds et des liens entre ces noeuds, ces noeuds de différents types et ces liens de différents types étant stockés dans des tables d'un Système de Gestion de Base de Données Relationnelle ou « SGBDR », avec une table par type de noeuds ou de liens, ce SGBDR étant apte à être interrogé par un langage de requête à partir d'un serveur applicatif relié à une interface utilisateur, les critères Fs étant déterminés sur les noeuds et/ou les liens, **caractérisé en ce qu'**il comprend les étapes suivantes :
a) création d'une table "CACHE" dans le SGBDR,
b) détermination par le SGBDR d'un ensemble E de départ comportant un ou plusieurs noeuds prédéterminés du graphe orienté acyclique, dits noeuds racine,
c) déroulement d'une itération ayant un identifiant « id » initialement égal à 1, et/ou des propriétés, qui comprend les sous-étapes suivantes :
i) détermination par le SGBDR de l'ensemble S des enfants des noeuds de E respectant les critères Fs,
ii) insertion par le SGBDR des noeuds de l'ensemble S et de leurs index respectifs dans la table "CACHE",
iii) détermination par le SGBDR d'un nouvel ensemble E en appliquant à l'ensemble des noeuds de la table "CACHE" des critères Fe pour sélectionner l'ensemble ou un sous-ensemble des noeuds de S, déterminés en fonction de la profondeur P', de l'identifiant « id » et/ou de propriétés de l'itération,
iv) P'=P'-1, id = id +1, répéter les étapes i, ii, iii, iv et v de l'itération tant que P'>0 et que S≠Ø,
d) envoi par le SGBDR au serveur applicatif d'une information de fin de traitement avec le nombre de noeuds chargés dans la table cache et d'un identifiant d'accès à la table "CACHE".

2. Procédé de structuration de données en un arbre ordonné selon la revendication précédente, **caractérisé en ce qu'**à chaque noeud enfant est associé un index qui permet de localiser de manière unique le noeud dans l'arbre.

3. Procédé de structuration de données en un arbre ordonné selon la revendication précédente, **caractérisé en ce que** l'étape ii) comprend les sous-étapes suivantes :
- copier l'ensemble S dans une table "ITERATION",
- calcul pour chaque noeud de S de son index et
- ajout dans la table "CACHE" des noeuds de S, ceux-ci étant respectivement associés à leur index.

4. Système de gestion de base de données relationnelle qui comprend des moyens de mise en oeuvre du procédé de structuration de données en un arbre ordonné selon l'une des revendications précédentes.
